(19) **Europäisches Patentamt / European Patent Office / Office européen des brevets**

(11) **EP 2 988 269 B1**

(12) **EUROPEAN PATENT SPECIFICATION**

(45) Date of publication and mention
of the grant of the patent:
**13.06.2018 Bulletin 2018/24**

(51) Int Cl.:
**G06T 3/40** (2006.01)

(21) Application number: **14181859.1**

(22) Date of filing: **21.08.2014**

(54) **A system and method for scaling and copying graphics**

System und Verfahren zum Skalieren und Kopieren von Grafiken

Système et procédé de mise à l'échelle et de copier des graphiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.02.2016 Bulletin 2016/08**

(73) Proprietor: **Advanced Digital Broadcast S.A.
1292 Chambesy (CH)**

(72) Inventor: **Kmiecik, Krzysztof
65-119 Zielona Gora (PL)**

(74) Representative: **Kancelaria Eupatent.pl Sp. z.o.o
Ul. Kilinskiego 185
90-348 Lodz (PL)**

(56) References cited:
**EP-A1- 1 385 339      EP-A2- 0 215 664
EP-A2- 1 762 983      US-A1- 2007 188 499**

- **Anonymous: "Image scaling - Wikipedia", , 6
August 2014 (2014-08-06), pages 1-9,
XP055394965, Retrieved from the Internet:
URL:https://en.wikipedia.org/w/index.php?t
itle=Image_scaling&oldid=620115495 [retrieved
on 2017-08-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to scaling and copying graphics in a computing system.

BACKGROUND

When a computing system, such as a personal computer or a digital television decoder, supports various output display resolutions, there is often a need to scale graphics. For example, an application, such as a user interface system of a digital television decoder (also called a set-top box), may be designed in a primary resolution, which needs to be scaled up or down depending on the type of the TV set that is connected to the set-top box.

When a computing system comprises a processor that supports such scaling, this task does not cause any problems.

However, there are processors which do not support such scaling. In such a case, it is a known technique to handle two graphic layers, each having its own memory block, wherein the primary layer is the layer of the application and corresponds to the native resolution of the application, and the output layer is the layer to be displayed on the screen and corresponds to the resolution of the display screen. When a portion of the primary layer is updated, that portion is scaled and copied to the corresponding portion of the output layer. This can be typically achieved by a blitter (BLock Image Transfer) circuit, which is dedicated to rapid movement and modification of data within memory. It can be implemented as a coprocessor or a logic block on a microprocessor.

A particular problem arises when the ratio of the output layer resolution and the primary layer resolution (or vice versa) is not an integer number. For example, when the output layer resolution is 1920x1080 pixels and the primary layer resolution is 720x576 pixels, then the scaling factors are 2,667 for the horizontal and 1,875 for the vertical direction. In such a case, a primary layer block of 5x3 pixels should be copied to the output layer as a block having dimensions of 13,335 x 5,625 pixels. This calls for a decision whether to provide the output block having a size of e.g. 13x5 pixels, 13x6 pixels or 14x6 pixels. This may lead to image distortions and artefacts, especially on the edges of the updated block.

A European patent application EP1762983 discloses methods and apparatus, including computer program products, that implement a method for glyph adjustment in high resolution raster while rendering. In one aspect, a method includes the actions of receiving a glyph for display at a size on a raster output device; receiving a grid ratio specifying an integer number of fine pixels of a high resolution grid that correspond to a device pixel of the output device; rendering the glyph at the size on the high resolution grid; determining for each line of pixels of the high resolution grid, a line-specific, per-transition adjustment number; and in each line of pixels, marking or erasing the line-specific, per-transition adjustment number of fine pixels in the high resolution grid at each transition from a marked fine pixel to an unmarked fine pixel in a particular direction of the line of pixels.

There is therefore a need to provide an improved manner of scaling graphics between two layers of different resolutions, in particular with a non-integer scaling factor, such as to reduce the amount of distortions at the output layer.

SUMMARY

There is presented a computer-implemented method and system for scaling and copying graphics according to the appended claims.

BRIEF DESCRIPTION OF FIGURES

The presented system and method are shown by means of exemplary embodiment on a drawing, in which:

Figs. 1A, 1B show schematically the portions of the primary layer and the output layer contents in a prior art method;
Figs. 2A, 2B show schematically the portions of the primary layer and the output layer contents in a first embodiment;
Figs. 3A, 3B show schematically the portions of the primary layer and the output layer contents in a second embodiment;
Fig. 4 shows a flowchart of a method for scaling graphics;
Fig. 5 shows a diagram of a system for scaling graphics;
Figs. 6A, 6B show tables with grid sizes corresponding to scaling between some commonly used graphic layer resolutions in horizontal and vertical directions, respectively.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

DETAILED DESCRIPTION

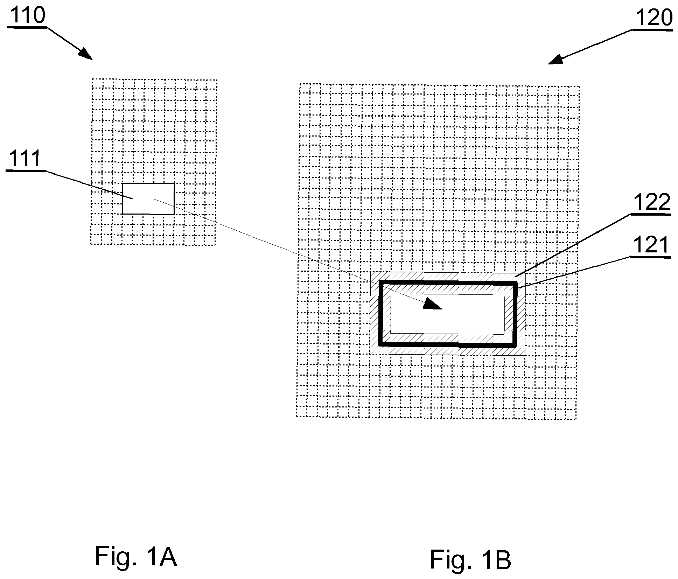

Figs. 1A, 1B show schematically portions of the primary layer and the output layer contents in a prior art method. The primary layer has a resolution of 720x576 pixels and the output layer has a resolution of 1920 x 1080 pixels, therefore the scaling factors are:

$$h\_ scaling = 1920 / 720 = 2,(6)$$

$$v\_ scaling = 1080 / 576 = 1,875$$

Therefore, when a rectangle 111 of coordinates (3; 10; 5; 3) (x_corner, y_corner, width, height) is to be copied from the primary layer 110 to the output layer 120, it should be inserted at the output layer 120 as a rectangle having coordinates (8,000; 18,750; 13,(3); 5,625). As the output layer 120 supports only integer pixels, a decision must be made on how to round the values. For example, the values may be rounded down when the fractional part is smaller than 0,5 and up when not smaller than 0,5. As a result, a rectangle 121 having coordinates (8, 19, 13, 6) will be inserted to the output layer 120. Obviously, some distortions 122 will appear due to the rounding, typically within 1 pixels inside and outside of the output rectangle boundaries.

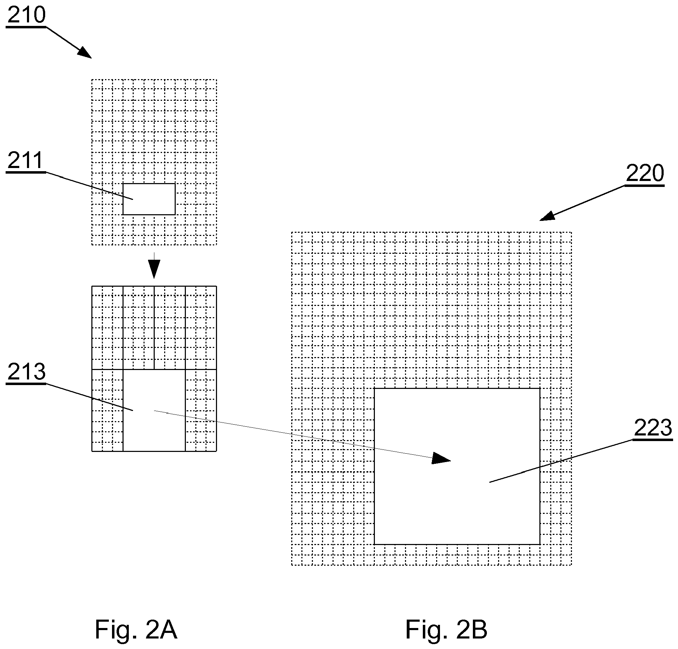

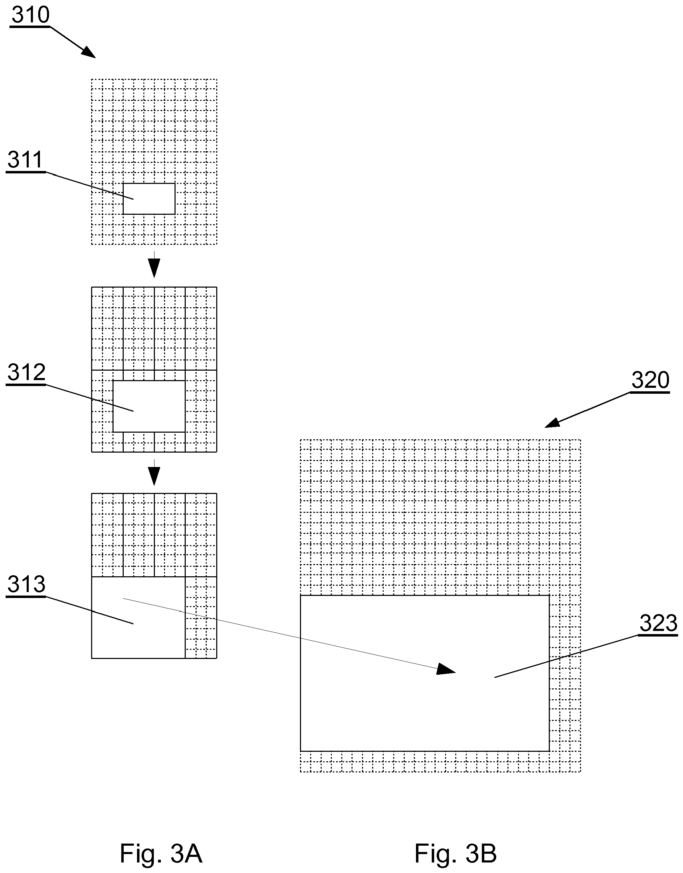

Figs. 2A, 2B and 3A, 3B show schematically portions of the primary layer and the output layer contents in a first and second embodiment of the method, the primary layers 210, 310 and the output layers 220, 320 having the resolutions as in Figs. 1A, 1B and the updated areas 211, 311 to be scaled from the primary layer to the output layer having the coordinates as in Figs. 1A, 1B.

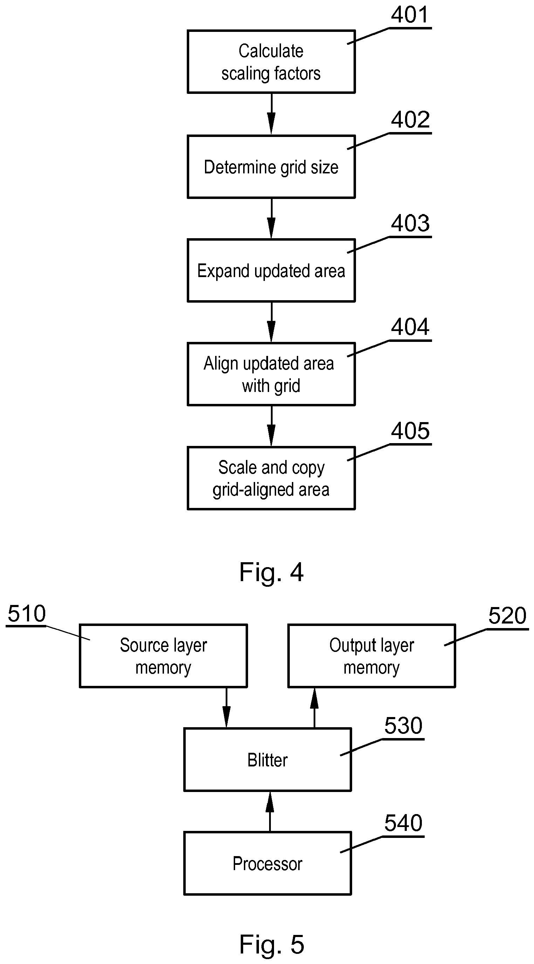

Fig. 4 shows a flowchart of the method for scaling images.

First, in step 401, the resolutions of the primary layer 210, 310 and the output layer 220, 320 are read to calculate scaling factors. In the presented examples, the scaling factors are h_scaling = 2,(6) and v_scaling = 1,875.

Next, in step 402, a grid size is determined. The size of grid in the horizontal direction x_grid is determined as an integer number, which when multiplied by the horizontal scaling factor h_scaling results in a number which is an integer or close to an integer within an allowable range (e.g. 0,01). The size of grid in the vertical direction y_grid is determined as an integer number, which when multiplied by the vertical scaling factor y_scaling results in a number which is an integer or close to an integer within an allowable range (e.g. 0,01). In the present case, x_grid is 3 and y_grid is 8, because:

$$h\_scaling * x\_grid = 2,(6) * 3 = 8,000$$

$$y\_scaling * y\_grid = 1,875 * 8 = 15,000$$

Next, in step 403, the updated area 311 on the primary layer may be expanded to an expanded updated area 312, in order to eliminate some distortions that may appear at the boundaries of the updated area when using scaling filters. For example, scaling filters which perform dithering may not work optimally at the boundaries, therefore the updated area may be expanded by e.g. 1 pixel in all directions, which results in expansion of the rectangle 311 (3; 10; 5; 3) to the rectangle 312 (2; 9; 7; 5). This is shown in the second embodiment and not shown in the first embodiment on Figs. 2A, 2B.

Next, in step 404, the updated area 211, 312 at the primary layer is expanded such that it its corners are aligned to the grid (which is shown in solid lines on Figs. 2A, 2B). In the first embodiment, the rectangle 211 (3, 10, 5, 3) will be expanded to a grid-aligned area rectangle (213) (3; 8; 6; 8). In the second embodiment, the rectangle 312 (2, 9, 7, 5) will be expanded to a grid-aligned area rectangle 313 (0; 8; 9; 8).

The grid-aligned areas 213, 313 are then scaled and copied in step 405 to the output layer to form updated output areas 223 (8; 15; 16; 15), 323 (0; 15; 24; 15).

In the presented example the updated area 211, 311 is defined as a rectangle, but other definitions may be applied as well, such as polygons defined by coordinates of corners.

Although the method requires more data to be scaled and copied from the primary layer to the output layer, it results in reduced distortions of the output image. Since the coordinates of the areas correspond to the grid size, which when multiplied by the scaling factors, result in integer numbers, then an integer number of pixels from the primary layer is scaled into an integer number (or close to an integer number) of pixels in the destination layer. Therefore, in case the grid is selected to result in a perfectly integer numbers, the scaling distortions are eliminated completely. In case the grid is selected to result in a number close to an integer, the scaling distortions are at least reduced to a large extent.

Fig. 5 shows a diagram of a system for scaling graphics. The system comprises a first memory area 510 configured to store the primary graphics layer 210, 310. A second memory area 520 is configured to store the output graphics layer 220, 320. A processor 540 is configured to scale and copy a primary graphics area 211, 311 from the primary layer 210, 310 to the output layer 220, 320 by performing at least some of the steps of the method of Fig. 4, at least by expanding 403 or 404 the primary graphics area 211, 311 before copying and scaling the graphics. In particular, the operations of copying data from the first memory area 510 to the second memory area 520 in response to instructions from the processor 540 can be performed by a blitter circuit 530.

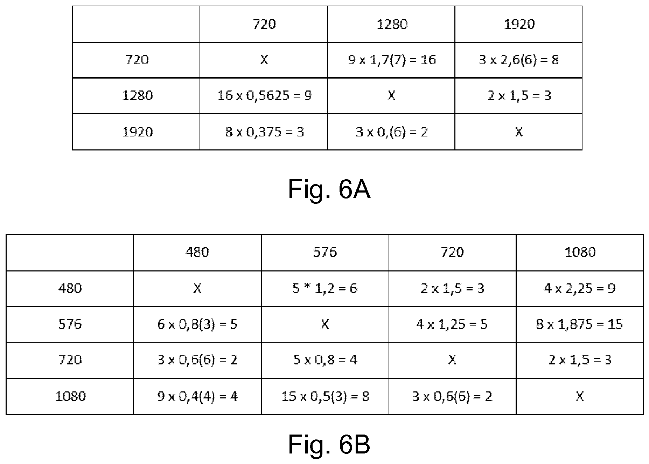

Figs. 6A, 6B show tables with grid sizes corresponding to scaling between some commonly used graphic layer resolutions in horizontal and vertical directions, respectively. The top row corresponds to an output resolution and the left column corresponds to a source resolution (in horizontal direction - 6A or vertical direction - 6B). The individual cells indicate the determined grid size multiplied by the scaling factor and the resulting integer number.

The present invention is related to a useful result of reduced amount of distortions at the output layer when scaling graphics between two layers of different resolutions with a non-integer scaling factor. This result is measurable and is hence concrete and tangible. Therefore, the invention as described herein provides a useful, concrete and tangible result.

Further, the invention is applied in particular devices such as an improved graphic processing devices, such as personal computers or digital television decoders, meaning that the idea underlying the invention is not abstract and is applied in particular improved machines. Thus the machine or transformation test is fulfilled.

It can be easily recognized, by one skilled in the art, that the aforementioned system and method for scaling and copying graphics may be performed and/or controlled by one or more computer programs. Such computer programs are typically executed by utilizing the computing resources of a processing unit which can be embedded within various graphic processing computer systems, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the system and method presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A computer-implemented method for scaling and copying a primary graphics area (211, 311) from a primary layer (210, 310) having a primary layer resolution to an output layer (220, 320) having an output layer resolution different than the primary layer resolution; the method being **characterized by**:

    - determining a grid having a horizontal grid size (x_grid) and a vertical grid size (y_grid) for the primary layer (210, 310),
    - expanding (404) the primary graphics area (211, 312) to a grid-aligned area (213, 313) by expanding corners of the primary graphics area towards the closest grid points;
    - and copying and scaling (405) the grid-aligned primary graphics area (213, 313) to the output layer (220, 320);
    - determining a horizontal scaling factor (x_scaling) as a ratio of the horizontal output layer resolution and the horizonal primary layer resolution;
    - determining a vertical scaling factor (y_scaling) as a ratio of the vertical output layer resolution and the vertical primary layer resolution;
    - determining the horizontal grid size (x_grid) as an integer number, which when multiplied by the horizontal scaling factor (x_scaling) results in a number which is close to an integer within an allowable range;
    - determining the vertical grid size (y_grid) as an integer number, which when multiplied by the vertical scaling factor (y_scaling) results in a number which is close to an integer within the allowable range;
    - wherein the allowable range is equal to 0,01.

2. The method according to claim 1, comprising expanding (403) the primary graphics area (311) by a predetermined number of pixels to an extended primary graphics area (312) before expanding (404) the primary graphics area (211, 312) to a grid-aligned area.

3. A computer program comprising program code means for performing all the steps of the computer-implemented method according to any of claims 1-2 when said program is run on a computer.

4. A computer readable medium storing computer-executable instructions performing all the steps of the computer-implemented method according to any of claims 1-2 when executed on a computer.

5. A computer system for scaling and copying graphics, the system comprising:

- a first memory area (510) configured to store a primary graphics layer (210, 310) having a primary layer resolution;
- a second memory area (520) configured to store an output graphics layer (220, 320) having an output layer resolution different than the primary layer resolution;
- a processor (540), the computer system being **characterized in that** the processor configured to:

- determine a grid for the primary layer (210, 310) by:

- determining a horizontal scaling factor (x_scaling) as a ratio of the horizontal output layer resolution and the horizontal primary layer resolution;
- determining a vertical scaling factor (y_scaling) as a ratio of the vertical output layer resolution and the vertical primary layer resolution;
- determining the horizontal grid size (x_grid) as an integer number, which when multiplied by the horizontal scaling factor (x_scaling) results in a number which is close to an integer within an allowable range;
- determining the vertical grid size (y_grid) as an integer number, which when multiplied by the vertical scaling factor (y_scaling) results in a number which is close to an integer within the allowable range;
- wherein the allowable range is equal to 0,01;

- expand (404) the primary graphics area (211, 312) to a grid-aligned area (213, 313) by expanding corners of the primary graphics area towards the closest grid points; and
- copy and scale (405) the grid-aligned primary graphics area (213, 313) to the output layer (220, 320).

6. The system according to claim 5, further comprising a blitter circuit (530) for copying data from the first memory area (510) to the second memory area (520) in response to instructions from the processor (540).

7. The system according to claim 5 or 6, wherein the processor (540) is configured to expand (403) the primary graphics area (311) by a predetermined number of pixels to an extended primary graphics area (312) before expanding (404) the primary graphics area (211, 312) to a grid-aligned area.

**Patentansprüche**

1. Computerimplementiertes Verfahren zum Skalieren und Kopieren eines Primärgrafikbereichs (211, 311) von einer Primärschicht (210, 310), die eine Primärschichtauflösung aufweist, zu einer Ausgangsschicht (220, 320), die eine Ausgangsschichtauflösung aufweist, die sich von der Primärschichtauflösung unterscheidet; wobei das Verfahren durch Folgendes gekennzeichnet ist:

- Festlegen eines Gitters, das eine horizontale Gittergröße (x_Gitter) und eine vertikale Gittergröße (y_Gitter) aufweist, für die Primärschicht (210, 310),
- Ausdehnen (404) des Primärgrafikbereichs (211, 312) zu einem am Gitter ausgerichteten Bereich (213, 313) durch Ausdehnen der Ecken des Primärgraphikbereichs in Richtung der am nächsten liegenden Gitterpunkte;
- und Kopieren und Skalieren (405) des am Gitter ausgerichteten Primärgrafikbereichs (213, 313) zur Ausgangsschicht (220, 320);
- Festlegen eines horizontalen Skalierungsfaktors (x_Skalierung) als Verhältnis der horizontalen Ausgangsschichtauflösung und der horizontalen Primärschichtauflösung;
- Festlegen eines vertikalen Skalierungsfaktors (y_Skalierung) als Verhältnis der vertikalen Ausgangsschichtauflösung und der vertikalen Primärschichtauflösung;
- Festlegen der horizontalen Gittergröße (x_Gitter) als ganze Zahl, die, wenn sie mit dem horizontalen Skalierungsfaktor (x_Skalierung) multipliziert wird, eine Zahl ergibt, die in einem zulässigen Bereich nahe einer ganzen Zahl liegt;
- Festlegen der vertikalen Gittergröße (y_Gitter) als ganze Zahl, die, wenn sie mit dem vertikalen Skalierungsfaktor (y_Skalierung) multipliziert wird, eine Zahl ergibt, die in einem zulässigen Bereich nahe einer ganzen Zahl liegt;
- wobei der zulässige Bereich 0,01 entspricht.

2. Verfahren nach Anspruch 1, umfassend das Ausdehnen (403) des Primärgrafikbereichs (311) um eine vorher festgelegte Anzahl von Pixeln zu einem erweiterten Primärgrafikbereich (312) vor dem Ausdehnen (404) des Primärgrafikbereichs (211, 312) zum am Gitter ausgerichteten Bereich.

**3.** Computerprogramm, umfassend Programmcodemittel zum Durchführen aller Schrittes des computerimplementierten Verfahrens nach einem der Ansprüche 1-2, wenn das Programm auf einem Computer ausgeführt wird.

**4.** Computerlesbares Medium, das computerausführbare Anweisungen zum Durchführen aller Schritte des computerimplementierten Verfahrens nach einem der Ansprüche 1-2, wenn es auf einem Computer ausgeführt wird, speichert.

**5.** Computersystem zum Skalieren und Kopieren von Grafiken, wobei das System Folgendes umfasst:

- einen ersten Speicherbereich (510), der dazu konfiguriert ist, eine Primärgrafikschicht (210, 310) zu speichern, die eine Primärschichtauflösung aufweist;
- einen zweiten Speicherbereich (520), der dazu konfiguriert ist, eine Ausgangsgrafikschicht (220, 320) zu speichern, die eine Ausgangsschichtauflösung aufweist, die sich von der Primärschichtauflösung unterscheidet;
- einen Prozessor (540), wobei das Computersystem **dadurch gekennzeichnet ist, dass** der Prozessor zu Folgendem konfiguriert ist:

- Festlegen eines Gitters für die Primärschicht (210, 310) durch:

- Festlegen eines horizontalen Skalierungsfaktors (x_Skalierung) als Verhältnis der horizontalen Ausgangsschichtauflösung und der horizontalen Primärschichtauflösung;
- Festlegen eines vertikalen Skalierungsfaktors (y_Skalierung) als Verhältnis der vertikalen Ausgangsschichtauflösung und der vertikalen Primärschichtauflösung;
- Festlegen der horizontalen Gittergröße (x_Gitter) als ganze Zahl, die, wenn sie mit dem horizontalen Skalierungsfaktor (x_Skalierung) multipliziert wird, eine Zahl ergibt, die in einem zulässigen Bereich nahe einer ganzen Zahl liegt;
- Festlegen der vertikalen Gittergröße (y_Gitter) als ganze Zahl, die, wenn sie mit dem vertikalen Skalierungsfaktor (y_Skalierung) multipliziert wird, eine Zahl ergibt, die in einem zulässigen Bereich nahe einer ganzen Zahl liegt;
- wobei der zulässige Bereich 0,01 entspricht;
- Ausdehnen (404) des Primärgrafikbereichs (211, 312) zu einem am Gitter ausgerichteten Bereich (213, 313) durch Ausdehnen der Ecken des Primärgraphikbereichs in Richtung der am nächsten liegenden Gitterpunkte; und
- Kopieren und Skalieren (405) des am Gitter ausgerichteten Primärgrafikbereichs (213, 313) zur Ausgangsschicht (220, 320).

**6.** System nach Anspruch 5, ferner umfassend eine Blitterschaltung (530) zum Kopieren von Daten aus dem ersten Speicherbereich (510) in den zweiten Speicherbereich (520) als Reaktion auf Anweisungen vom Prozessor (540).

**7.** System nach Anspruch 5 oder 6, wobei der Prozessor (540) dazu konfiguriert ist, den Primärgrafikbereich (311) um eine vorher festgelegte Anzahl an Pixeln zu einem erweiterten Primärgrafikbereich (312) auszudehnen (403), bevor der Primärgrafikbereich (211, 312) zu einem am Gitter ausgerichteten Bereich ausgedehnt wird (404).

**Revendications**

**1.** Procédé mis en oeuvre par ordinateur permettant de mettre à l'échelle et de copier une zone graphique primaire (211, 311), depuis une couche primaire (210, 310) possédant une résolution de couche primaire sur une couche de sortie (220, 320) possédant une résolution de couche de sortie différente de la résolution de couche primaire ; ledit procédé étant **caractérisé par** :

- la détermination d'une grille possédant une taille de grille horizontale (x_grid) et une taille de grille verticale (y_grid) pour la couche primaire (210, 310),
- l'élargissement (404) de la zone graphique primaire (211, 312) à une zone alignée sur la grille (213, 313) en élargissant les coins de la zone graphique primaire vers les points de grille les plus proches ;
- et la copie et la mise (405) de la zone graphique primaire alignée sur la grille (213, 313) à l'échelle de la couche de sortie (220, 320) ;
- la détermination d'un facteur d'échelle horizontal (x_scaling) sous la forme d'un rapport de la résolution de couche de sortie horizontale sur la résolution de couche primaire horizontale ;
- la détermination d'un facteur d'échelle vertical (y_scaling) sous la forme d'un rapport de la résolution de couche de sortie verticale sur la résolution de couche primaire verticale ;
- la détermination de la taille de grille horizontale (x_grid) sous la forme d'un nombre entier, qui, lorsqu'il est multiplié par le facteur d'échelle horizontal (x_scaling) résulte en un nombre qui est proche d'un entier dans la plage autorisée ;
- la détermination de la taille de grille verticale (y_grid) sous la forme d'un nombre entier, qui, lorsqu'il est multiplié par le facteur d'échelle vertical (y_scaling) résulte en un nombre qui est proche d'un entier dans la plage autorisée ;
- ladite plage autorisée étant égale à 0,01.

**2.** Procédé selon la revendication 1, comprenant l'élargissement (403) la zone graphique primaire (311) par un nombre prédéfini de pixels à une zone graphique primaire étendue (312) avant l'élargissement (404) de la zone graphique primaire (211, 312) à une zone alignée sur la grille.

**3.** Programme informatique comprenant un moyen de code de programme permettant d'effectuer toutes les étapes du procédé mis en oeuvre par ordinateur selon l'une quelconque des revendications 1 à 2 lorsque ledit programme est exécuté sur un ordinateur.

**4.** Support lisible par ordinateur stockant des instructions exécutables par ordinateur effectuant toutes les étapes du procédé mis en oeuvre par ordinateur selon l'une quelconque des revendications 1 à 2 lorsqu'elles sont exécutées sur un ordinateur.

**5.** Système informatique permettant de mettre à l'échelle et de copier des graphiques, ledit système comprenant :

- une première zone mémoire (510) configurée pour stocker une couche graphique primaire (210, 310) possédant une résolution de couche primaire ;
- une seconde zone mémoire (520) configurée pour stocker une couche graphique de sortie (220, 320) possédant une résolution de couche de sortie différente de la résolution de couche primaire ;
- un processeur (540), le système informatique étant **caractérisé en ce que** le processeur est configuré pour :

- déterminer une grille pour la couche primaire (210, 310) en :

- déterminant un facteur d'échelle horizontal (x_scaling) sous la forme d'un rapport de la résolution de couche de sortie horizontale sur la résolution de couche primaire horizontale ;
- la détermination d'un facteur d'échelle vertical (y_scaling) sous la forme d'un rapport de la résolution de couche de sortie verticale sur la résolution de couche primaire verticale ;
- la détermination de la taille de grille horizontale (x_grid) sous la forme d'un nombre entier, qui, lorsqu'il est multiplié par le facteur d'échelle horizontal (x_scaling) résulte en un nombre qui est proche d'un entier dans la plage autorisée ;
- la détermination de la taille de grille verticale (y_grid) sous la forme d'un nombre entier, qui, lorsqu'il est multiplié par le facteur d'échelle vertical (y_scaling) résulte en un nombre qui est proche d'un entier dans la plage autorisée ;
- ladite plage autorisée étant égale à 0,01 ;
- élargir (404) la zone graphique primaire (211, 312) à une zone alignée sur la grille (213, 313) en élargissant les coins de la zone graphique primaire vers les points de grille les plus proches ; et
- copier et mettre (405) la zone graphique primaire alignée sur la grille (213, 313) à l'échelle de la couche de sortie (220, 320).

**6.** Système selon la revendication 5, comprenant en outre un circuit blitter (530) pour la copie des données de la première zone mémoire (510) dans la seconde zone mémoire (520) en réponse aux instructions provenant du processeur (540).

**7.** Système selon la revendication 5 ou 6, ledit processeur (540) étant configuré pour élargir (403) la zone graphique primaire (311) par un nombre prédéfini de pixels à une zone graphique primaire étendue (312) avant d'élargir (404) la zone graphique primaire (211, 312) à une zone alignée sur la grille.

110

111

120

122

121

Fig. 1A

Fig. 1B

210

211

213

Fig. 2A

220

223

Fig. 2B

310

311

312

313

320

323

Fig. 3A          Fig. 3B

401

Calculate
scaling factors

402

Determine grid size

403

Expand updated area

404

Align updated area
with grid

405

Scale and copy
grid-aligned area

Fig. 4

510

Source layer
memory

520

Output layer
memory

530

Blitter

540

Processor

Fig. 5

|       | 720 | 1280 | 1920 |
|-------|-----|------|------|
| 720   | X   | 9 x 1,7(7) = 16 | 3 x 2,6(6) = 8 |
| 1280  | 16 x 0,5625 = 9 | X | 2 x 1,5 = 3 |
| 1920  | 8 x 0,375 = 3 | 3 x 0,(6) = 2 | X |

# Fig. 6A

|      | 480 | 576 | 720 | 1080 |
|------|-----|-----|-----|------|
| 480  | X   | 5 * 1,2 = 6 | 2 x 1,5 = 3 | 4 x 2,25 = 9 |
| 576  | 6 x 0,8(3) = 5 | X | 4 x 1,25 = 5 | 8 x 1,875 = 15 |
| 720  | 3 x 0,6(6) = 2 | 5 x 0,8 = 4 | X | 2 x 1,5 = 3 |
| 1080 | 9 x 0,4(4) = 4 | 15 x 0,5(3) = 8 | 3 x 0,6(6) = 2 | X |

# Fig. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1762983 A